# EUROPÄISCHE PATENTSCHRIFT

(11) **EP 0 835 474 B1**
(45) Veröffentlichungstag und Bekanntmachung des Hinweises auf die Patenterteilung: **01.09.1999**
(21) Anmeldenummer: 96921880.9
(22) Anmeldetag: 26.06.1996
(51) Int. Cl.: G02B 26/08, G09F 9/37

(54) **Mikromechanische Bewegungseinrichtung zur Ablenkung von Lichtstrahlen und Verfahren zu deren Herstellung**
Micromechanical moving device for deflecting light beams and method of fabrication thereof
Dispositif de mouvement micromécanique pour la déflexion d'un faisceau de lumière et méthode de manufacture

(30) Priorität: 30.06.1995 DE 19523886; 20.12.1995 DE 19547584
(43) Veröffentlichungstag der Anmeldung: 15.04.1998
(73) Patentinhaber: CMS, Mikrosysteme GmbH Chemnitz, 09125 Chemnitz (DE)
(72) Erfinder: DÖTZEL, Wolfram, D-09122 Chemnitz (DE); GESSNER, Thomas, D-09113 Chemnitz (DE); HAHN, Ramon, D-09126 Chemnitz (DE); KAUFMANN, Christian, D-09217 Burgstädt (DE); LÖWE, Heinz-Ulrich, D-09577 Niederwiesa (DE); MARKERT, Joachim, D-09119 Chemnitz (DE); RAUCH, Manfred, D-09114 Chemnitz (DE); WOLLMANN, Udo, D-09111 Chemnitz (DE)
(74) Vertreter: Krause, Wolfgang
(86) Internationale Anmeldenummer: DE9601177
(87) Internationale Veröffentlichungsnummer: WO9702506

(56) Entgegenhaltungen:
- EP-A- 0 040 302
- EP-A- 0 463 348
- EP-A- 0 469 293
- DD-A- 298 856
- DE-A- 4 224 599
- SENSORS AND ACTUATORS A, Bd. A41, Nr. 1/03, 1.April 1994, Seiten 324-329, XP000450049 JAECKLIN V P ET AL: "LINE-ADDRESSABLE TORSIONAL MICROMIRROS FOR LIGHT MODULATOR ARRAYS" in der Anmeldung erwähnt
- JOURNAL OF PHYSICS E. SCIENTIFIC INSTRUMENTS, Bd. 21, Nr. 7, Juli 1988, Seiten 680-685, XP000005638 GUSTAFSSON K ET AL: "A SILICON LIGHT MODULATOR"
- IBM TECHNICAL DISCLOSURE BULLETIN, Bd. 20, Nr. 1, Juni 1977, NEW YORK US, Seiten 355-356, XP002015961 PETERSEN K E: "Micromechanical Light Deflector Array"
- IBM TECHNICAL DISCLOSURE BULLETIN, Bd. 22, Nr. 12, Mai 1980, NEW YORK US, Seiten 5575-5577, XP002015962 HARTSTEIN A M: "Color Projection Display System using Silicon Micromechanics"
- SPATIAL LIGHT MODULATORS AND APPLICATIONS III. SPIE, Bd. 1150, 7. - 8.August 1989, SAN DIEGO, CA, US, Seiten 86-102, XP000351394 HORNBECK L J: "DEFORMABLE-MIRROR SPATIAL LIGHT MODULATORS"

## Beschreibung

Die Erfindung betrifft mikromechanische Bewegungseinrichtungen und ein Verfahren zu deren Herstellung.

Aus der Literatur sind eine Vielzahl von mikromechanischen Bewegungseinrichtungen bekannt, die mit Hilfe einer Spiegelanordnung eine definierte Ablenkung von Lichtstrahlen zum Ziel haben.
In der DE 42 24 599 wird eine elektrostatische Ablenkeinheit beschrieben. Grundlage bildet ein plättchenförmiges schwenkbares Element, welches durch die Realisierung in einer Sandwich-Struktur oder durch Ausnehmungen zwischen verbleibenden stegartigen Bereichen in seiner Masse verringert wurde. Die Aufhängung erfolgt über zwei an diagonal gegenüberliegenden Ecken angebrachte Biegebalken. Gehalten wird dieses Element in einem Rahmen.
Eine weitere Lösung enthält die DD 298 856 zweidimensionale mikromechanische Bewegungseinrichtung. Die Drehplatte wird dabei mittig auf einer Spitze, die sich auf der Grundplatte befindet, gelagert und über vier Federelemente im Ausgangszustand parallel zur Grundplatte gehalten. Die gesamte Einrichtung ist ebenfalls in einem Rahmen angeordnet.
Diese Lösungen beinhalten Einzelkippvorrichtungen, die damit in ihrer Anwendung durch die festgelegte Kippfläche begrenzt sind. Weiterhin erfolgt das Kippen einer relativ großen Fläche, so daß eine weitere Einschränkung in der Dynamik gegeben ist.
Die EP 0 040 302 enthält eine optische Strahlablenkungseinheit. Hierbei wird eine plättchenförmige Ablenkeinheit, die aus Silizium gefertigt ist, über zwei einseitige Drehfedern elektrostatisch gegenüber einer Grundplatte gekippt. Weiterhin werden parallele oder nichtparallele Mehrfachanordnungen dieser plättchenförmigen Ablenkeinheit vorgestellt. Diese werden dabei einzeln von Rahmen eng umschlossen.
Der Nachteil liegt hierbei ebenfalls in der großflächigen Realisierung einer Kippvorrichtung. Damit ergeben sich Einschränkungen bei der Dynamik.
Lösungen, die ohne Rahmen auskommen, sind in den
- EP 0 463 348 Bistabiler DMD-Ansteuerschaltkreis und Ansteuerverfahren und
- EP 0 469 293 Mehrschichtige verformbare Spiegelstruktur zu finden. Hierbei werden plättchenförmige Spiegel um die Symmetrieachsen gekippt.
Diese Lösungen besitzen den Nachteil einer großen Masse und einem großen Massenträgheitsmoment bezogen auf die geometrische Achse.
Im Journal Sensors and Actuators, Vol. A 41 complete (1994), S. 324-329, "Lineaddressable torsional micromirrors for light modulator arrays" wird die Präparation eines Spiegelarrays beschrieben. Zur Erzielung des Grundabstandes zwischen Spiegelunterkanten und Elektroden wird nach der Herstellung der Elektroden eine Opferschicht aus Siliziumdioxid aufgebracht. Um die Federn, die die Auslenkung des Spiegels ermöglichen, mechanisch auf dem Substrat zu fixieren, werden Fenster in die Opferschicht geätzt. Bei der nachfolgenden Abscheidung von Polysilizium entsteht somit eine Schicht, die teilweise direkt mit dem Substrat verbunden ist. Die Spiegel entstehen dann in den Bereichen der Polysiliziumschicht, die mit der Opferschicht unterlegt sind. Anschließend wird eine Aluminiumschicht als Reflektor aufgebracht. Mit dem naßchemischen Ätzen der Opferschicht wird der Fertigungsprozeß beendet. Eine flächendeckende Anordnung von Spiegeln wird nicht erreicht.
Die beschriebene Oberflächentechnik verwendet eine Polysiliziumschicht für die Aktoren.
Im Journal Solid State Technology, July 1994, S. 63-68, "Digital micromirror array for projection TV" wird eine Entwicklung der Firma Texas Instruments Inc. vorgestellt. Das Array wurde speziell für TV-Anwendungen konzipiert und besteht aus einer Matrix von 768x576 Einzelspiegeln. Der Grundabstand zwischen den Spiegeln und den Elektroden wird hierbei durch eine organische Opferschicht realisiert. Diese wird aufgeschleudert und planarisiert damit Unebenheiten, die durch darunter liegende Strukturen (Elektroden) hervorgerufen werden. Die Spiegel sowie die Federn werden aus einer Aluminiumlegierung hergestellt. Um die Federn gegenüber dem Substrat abzustützen, sind spezielle Stützpfosten vorgesehen. Sie entstehen mit Hilfe von kleinen Löchern in der Opferschicht, welche mit der obengenannten Legierung aufgefüllt werden. Nach dem Vereinzeln der Chips wird die Opferschicht mit einem Plasmaätzschritt entfernt.
Die beschriebenen Anordnungen erlauben nur zwei Zustände für die Spiegel (Ruhelage bzw. maximale Auslenkung).

Der in den Patentansprüchen 1 und 14 angegebenen Erfindung liegt das Problem zugrunde, insbesondere ein mikromechanisches Spiegelarray zu schaffen, das sich durch eine hohe erzielbare Resonanzfrequenz auszeichnet und gleichzeitig eine große aktive Gesamtfläche besitzt. Es soll dabei durch ein Verfahren realisiert werden, das sich durch die Anwendung weniger technologische Verfahrensschritte auszeichnet.

Dieses Problem wird mit den in den Patentansprüchen 1 und 14 aufgeführten Merkmalen gelöst.

Die mit der Erfindung erzielten Vorteile bestehen insbesondere darin, daß ein mit zwei Schichten unterschiedlicher Ätzcharakteristik versehener Halbleiterwafer alle Elemente vorzugsweise eines Spiegelarrays einerseits in Form von parallel zueinander angeordneten, beweglichen und einstückig bandförmig ausgebildeten Elektroden mit integrierten Federn und Stützelementen und andererseits in Form elektrischer Anordnungen unter anderem von Elektroden, Zuleitungen und Bondpads enthält, ohne daß ein herkömmlicher Aufbau aus zusammengefügten Einzelschichten vorhanden ist.
Mit Verwendung von einkristallinem Silizium für die beweglichen Elektroden können die bekannten und bewährten Verfahren der Mikroelektronik angewandt werden. Gleichzeitig wird eine große Standzeit der Federn erreicht.
Die Aufteilung der gesamten Schwenkfläche in die parallel zueinander angeordneten, beweglichen und einstückig bandförmig ausgebildeten Elektroden führt zu einer Erhöhung der Dynamik der Stellvorgänge durch die geringeren Massen und damit des geringeren Massenträgheitsmomentes bezogen auf die Drehachse. Pro parallel zueinander angeordneter, beweglicher und einstückig bandförmig ausgebildeter Elektrode sind damit weiterhin geringere Feldstärken zur Bewegung notwendig.
Die Oxidschicht unmittelbar auf dem Halbleiterwafer stellt eine Opferschicht dar. Damit erfordert die Ausbildung der Stützelemente keine zusätzlichen technologischen Prozesse, da diese direkt aus der Oxidschicht durch eine partielle Ätzung gebildet werden. Somit justieren sich die Stützelemente bezüglich der Spiegellängsachse selbst. Es ergibt sich ein gleiches Oberflächenniveau der Stützelemente und damit gleichzeitig der Einzelspiegel. Eine Durchbiegung und damit eine Verfälschung des Stellergebnisses wird weitestgehend verhindert. Gleichzeitig wird eine Unterbrechung der im Spiegelinnern verlaufenden Federn vermieden, was ebenfalls zur Verbesserung der Eigenschaften beiträgt.
Die zweite Schicht auf der Oxidschicht ist eine weitere Isolierschicht. Diese dient als Träger für die elektrischen Anordnungen, so daß mit einer Wendung dieses Halbleiterwafers die Unebenheiten, die bei der Ausbildung der Elektroden herkömmlicher mikromechanischer Spiegelanordnungen entstehen, gegenstandslos sind.
Die mechanischen Bestandteile werden vorzugsweise aus einkristallinem Silizium gefertigt, das sich dadurch auszeichnet, daß es frei von Ermüdungserscheinungen ist. Dadurch wird gegenüber polykristallinen Werkstoffen trotz dynamischen Betriebes eine nahezu unbegrenzte Lebensdauer der mechanischen Bestandteile erreicht.
Die einzelnen parallel zueinander angeordneten, beweglichen und einstückig bandförmig ausgebildeten Elektroden können unabhängig voneinander bewegt werden, so daß bei einer Gestaltung dieser Elektroden als Spiegel der reflektierte Strahl nicht nur abgelenkt, sondern auch fokussiert oder aufgeweitet werden kann. Weiterhin lassen sich diese analog ansteuern und können somit beliebige Bewegungsfunktionen (u.a. Sinus, Säge-zahn, Dreieck) um ihre Längsachse ausführen.
Mit dem Einsatz schmaler Spiegelflächen als parallel zueinander angeordnete, bewegliche und einstückig bandförmig ausgebildete Elektrode sind größere Ablenkwinkel als beim Einsatz großflächiger Kippspiegel bei gleichem Abstand Spiegelunterkante zu Grundkörper realisierbar. Je schmaler diese Elektroden gestaltet werden, um so größere Ablenkwinkel sind realisierbar.
Mit der Anordnung mehrerer mikromechanischer Spiegelarrays in einer Zeile oder Matrix ist ein großflächiges Ablenken von Strahlen, verbunden mit einer hohen Dynamik, möglich.
Das mikromechanische Spiegelarray ist besonders für Anwendungen in der Bildwiedergabetechnik mittels Laserstrahl geeignet. Damit kann ein Laserstrahl durch die Drehbewegung mehrerer parallel angesteuerter Einzelspiegel ausgelenkt werden. Um die hohen Resonanzfrequenzen zu erreichen, wird das mikromechanische Spiegelarray mit einer großen optisch wirksamen Fläche aus mehreren parallel angeordneten Einzelspiegeln von geringer Breite und vorwiegend annähernd gleicher Länge zusammengesetzt.
Die charakteristischen Parameter der Anordnung, wie Resonanzfrequenz und Ablenkwinkel, werden durch die dynamischen und statischen Eigenschaften der vielen kleinen Einzelspiegel bestimmt.
Bei der Herstellung des mikromechanischen Arrays werden Verfahrensschritte der Oberflächenmikromechanik genutzt, so daß bewährte Technologien zur Anwendung kommen. Damit ist es möglich, diese Anordnungen auf bestehenden Anlagen herzustellen.
Vorteilhafte Ausgestaltungen der Erfindung sind in den Patentansprüchen 2 bis 13 und 15 bis 18 angegeben.
Mit dem Einsatz von verschieden gestalteten Federn als Schwenk-Lagerstellen nach den Weiterbildungen der Patentansprüche 2 bis 5 sind die Bewegungen der parallel zueinander angeordneten, beweglichen und einstückig bandförmig ausgebildeten Elektroden zu realisieren. Der Einsatz einer einseitigen Drehfeder nach der Weiterbildung des Patentanspruchs 3 führt zu einer Schwenk-Lagerstelle, die mit geringstem Kraftaufwand eine Bewegung der Elektrode zuläßt.
Die Weiterbildungen nach den Patentansprüchen 6 bis 13 zeigen funktionale Realisierungsvarianten auf. Durch den Einsatz von entspiegelndem Glas ist der Einsatz als Ablenkspiegeleinheit gegeben.
Die Weiterbildung nach den Patentansprüchen 13, 16 und 17 gestattet den Trennprozeß zur Vereinzelung der Bewegungseinrichtungen aus dem Waferverbund, da der Halbleiterwafer durch den Glaswafer hermetisch abgedichtet ist. Diese Maßnahme ermöglicht eine effektive Massenproduktion.
Die Weiterbildung nach Patentanspruch 15 führt zu einer Erhöhung der Oxidschicht als Opferschicht, so daß größere Ablenkwinkel erreichbar sind.

Ein Ausführungsbeispiel der Erfindung ist in den Zeichnungen dargestellt und wird im folgenden näher beschrieben. Es zeigen:
- Figur 1: mikromechanische Bewegungseinrichtung in Draufsicht,
- Figur 2: einen Ausschnitt einer beweglichen und einstückig bandförmig ausgebildeten Elektrode mit einem Stützelement und einer doppelseitigen Drehfeder,
- Figur 3: eine perspektivische Darstellung der Figur 2,
- Figur 4: einen vereinfacht dargestellten Querschnitt der mikromechanischen Bewegungseinrichtung,
- Figur 5 a-e: Varianten von Schwenk-Lagerstellen,
- Figur 6: die Darstellung des partiellen Ätzens der Oxidschicht zur Ausbildung der Stützelemente und
- Figuren 7 bis 14: Prinzipdarstellungen von Verfahrensschritten zur Herstellung der mikromechanischen Bewegungseinrichtung.

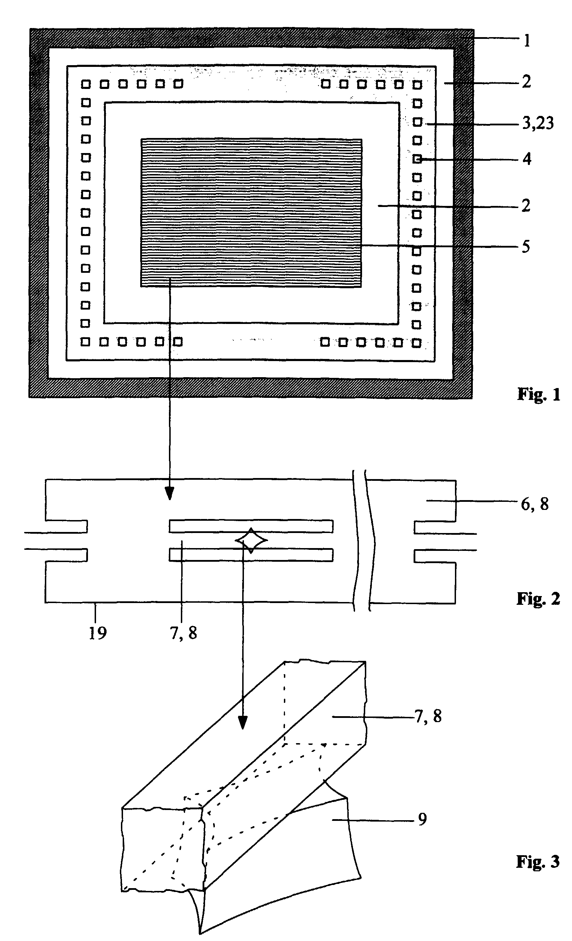

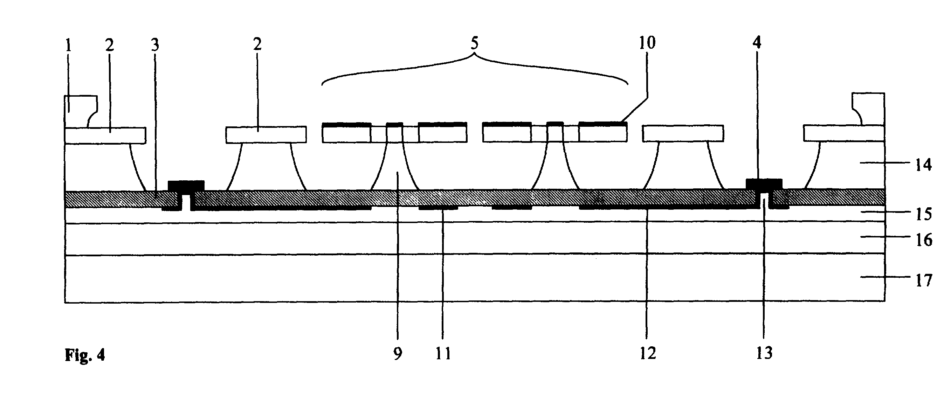

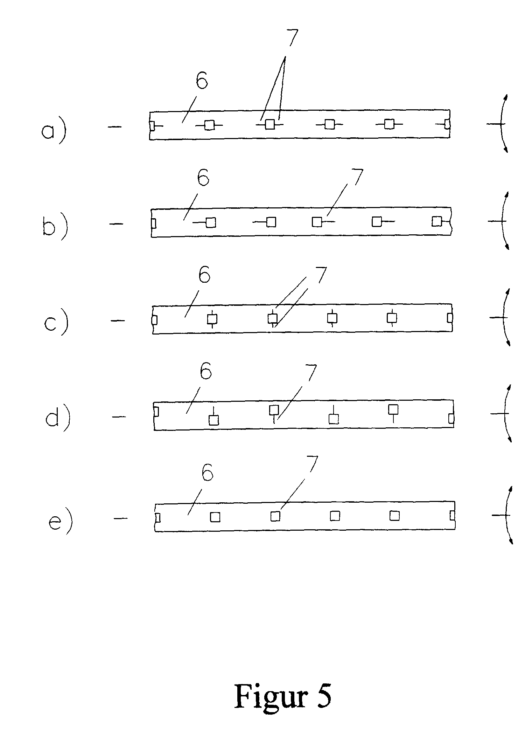

Grundlage des mikromechanischen Spiegelarrays 5 entsprechend den Darstellungen in den Figuren 1 und 4 bildet ein mit zwei Schichten versehener Halbleiterwafer 2. Es ist eine Schichtfolge Halbleiterwafer 2 aus einkristallinem Silizium, Oxidschicht 14 aus Siliziumdioxid und Isolierschicht 3 aus Siliziumnitrid vorhanden.
Dieser beschichtete Halbleiterwafer 2 stellt die Elemente
- parallel zueinander angeordnete, bewegliche und einstückig bandförmig ausgebildete Elektroden 8 in Realisierung als Einzelspiegel 6 mit integrierten Federn 7 entsprechend der Figur 2 aus einkristallinem Silizium,
- Stützelemente 9 entsprechend der Anzahl der integrierten Federn 7 aus Siliziumdioxid (Figur 3) und
- elektrische Isolierschicht 3 zur Isolation der elektrischen Kontaktstruktur aus Siliziumnitrid des mikromechanischen Spiegelarrays 5 selbst dar.
Die Einzelspiegel 6 sind mit einer Reflexionsschicht 10 aus Aluminium versehen. Die Reflexionsschichten 10 dieser Einzelspiegel 6 sind über eine Leitungsstruktur auf dem die Einzelspiegel 6 umgebenden Träger miteinander verbunden. Damit sind die Einzelspiegel 6 gleichzeitig parallel zueinander angeordnete, bewegliche und einstückig bandförmig ausgebildete Elektroden 8. Die Federn 7 sind entsprechend den Darstellungen der Figuren 2 und 5a als in Längsrichtung der Einzelspiegel 6 eingebrachte doppelseitige Drehfedern ausgebildet.
An jedem Zentrum der doppelseitigen Drehfedern ist ein Stützelement 9 angeordnet. Damit ist eine Kippbewegung jedes Einzelspiegels 6 gegeben.
Die Isolierschicht 3 trägt auf den der Einzelspiegel 6 gegenüberliegenden Seite die Elektroden 11, elektrischen Zuleitungen 12 und Bondpads 4, die aus Aluminium bestehen.
Die Elektroden 11 sind korrespondierend zu den Einzelspiegeln 6 angeordnet. Die Anzahl der Elektroden 11 entspricht dabei der Anzahl der Einzelspiegel 6 im Verhältnis 2 zu 1. Durch die damit parallel zueinander verlaufenden Elektroden ist eine elektrostatische Ansteuerung der Einzelspiegel 6 gegeben. Mit der Anordnung zweier Elektroden 11 pro Einzelspiegel 6 und einer wechselseitigen Ansteuerung ist das Kippen der Einzelspiegel 6 um das Stützelement möglich.
Dieser Aufbau befindet sich auf einem weiteren mit einer Oxidschicht 16 versehenen Halbleiterwafer 17, der als Träger für diesen gesamten Aufbau fungiert. Als Verbindungsebene, die gleichzeitig die Höhendifferenzen der Elektroden 11 und Zuleitungen 12 ausgleicht, dient eine weitere Isolierschicht 15.
Um ein Vereinzeln der mikromechanischen Spiegelarrays 5 zu gewährleisten, befindet sich auf dem Halbleiterwafer 2 eine Deckplatte in Form eines Glaswafers 1. Diese ist so ausgebildet, daß sie nach dem Vereinzeln des mikromechanischen Spiegelarrays 5 entweder auf diesem verbleibt oder mit Hilfe von in diese eingebrachte Sollbruchstellen 26 flächig über dem Spiegelarray 5 entfernt wird. Im ersten Fall sind die Zuleitungen 12 von außen kontaktierbar, ist das Glasfensterinnenteil 28 des Glaswafers 1 so verdünnt, daß die Einzelspiegel 6 bis zur Kippgrenze verstellt werden können und besteht der Glaswafer aus entspiegeltem Glas.

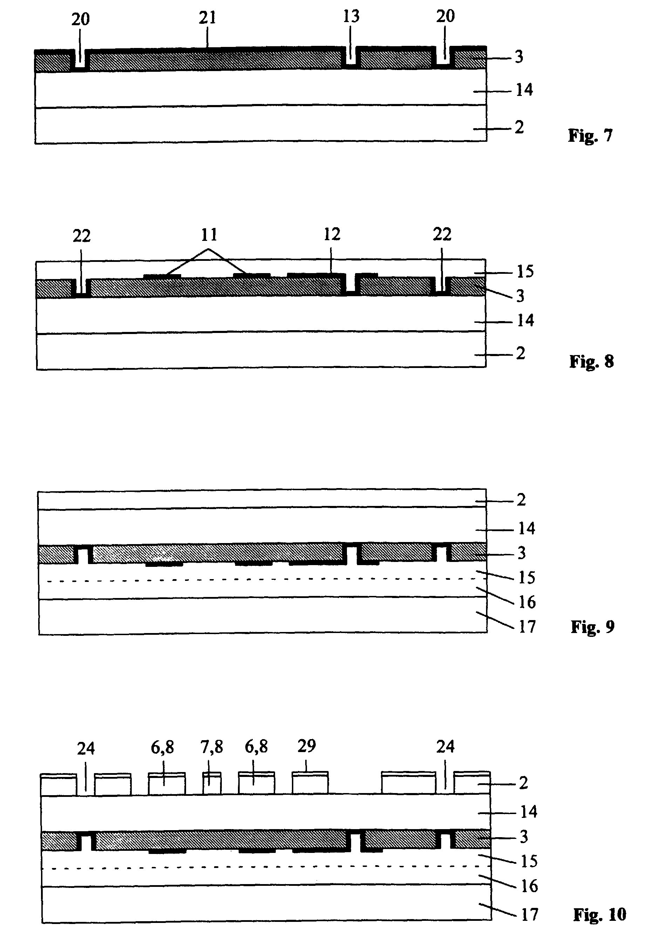

Weitere Ausführungsbeispiele ergeben sich durch verschiedene Ausführungsformen von einzelnen Bauteilen.
Eine Auswahl von möglichen Gestaltungsformen der Federn zeigt die Figur 5. Diese können in Form von einseitigen (Figur 5b) und doppelseitigen (Figur 5a) Drehfedern, einfachen (Figur 5d) und doppelten (Figur 5c) Biegefedern und Membran-, Spiral- oder Kreuzfedern (schematisch in der Figur 5e dargestellt) realisiert werden.
Als günstigste Varianten erweisen sich die einseitigen Drehfedern, die einseitigen Biegefedern oder die Spiralfedern, da dabei nur ein Biegebalken vorhanden ist.
Das Verfahren zur Herstellung der mikromechanischen Bewegungseinrichtung wird an Hand der Darstellungen der Figuren 7 bis 14 näher erläutert.
Um eine einer großen Auslenkung der Einzelspiegel 6 gewährleistende und technologisch sinnvolle Dicke der Oxidschicht 14 als Opferschicht zu erzielen, werden zwei Halbleiterwafer durch thermische Oxidation mit jeweils 1,65 µm Siliziumdioxid versehen und durch einen Silicon Fusion Bondprozeß (SFB) miteinander verbunden. Anschließend wird einer der beiden Halbleiterwafer in einem KOH-Ätzbad entfernt. Auf diese Weise entsteht ein Halbleiterwafer 2 mit einer Oxidschicht 14 als Opferschicht von 3,3 µm Dicke.
Entsprechend der Darstellung der Figur 7 wird anschließend der Halbleiterwafer 2 mit einer Isolierschicht 3 aus Siliziumnitrid von 350 nm Dicke versehen. Diese Isolierschicht 3 erfüllt während der Ätzung der Oxidschicht 14 den Zweck einer Ätzstoppschicht. Es schließt sich ein fotolithographischer Prozeß an, der zusammen mit einem Plasmaätzschritt zur Ausbildung von Fenstern 13 und 20 in der Isolierschicht 3 führt. Davon dienen vier Fenster 20, die sich am Rand des Halbleiterwafers 2 befinden, der Ausbildung von Justiermarken 22, während die Fenster 13 der Realisierung von Bondpads 4 dienen. Im Anschluß daran wird eine elektrisch leitende Schicht 21 von 300 nm Dicke gesputtert, die aus einer Molybdän-Silizium-Verbindung besteht.
Mit einem fotolithografischen Prozeß und einem Plasmaätzschritt werden die Strukturen für die Elektroden 11 und die Zuleitungen 12 zu den Bondpads 4 in die elektrisch leitende Schicht 21 übertragen. Nach der Strukturierung wird mit einer Temperung die gesputterte Molybdän-Silizium-Verbindung in eine Silicidphase mit geringem elektrischen Widerstand überführt.
Nachfolgend wird mit einem CVD-Prozeß eine weitere Isolierschicht 15 in Form einer Siliziumdioxidschicht von 200 nm Dicke entsprechend der Figur 8 abgeschieden. Diese Isolierschicht 15 übernimmt zusammen mit der Oxidschicht 16 des Halbleiterwafers 17 die Funktion eines Isolators zwischen den Elektroden 11 und dem als Träger fungierendem Halbleiterwafer 17.

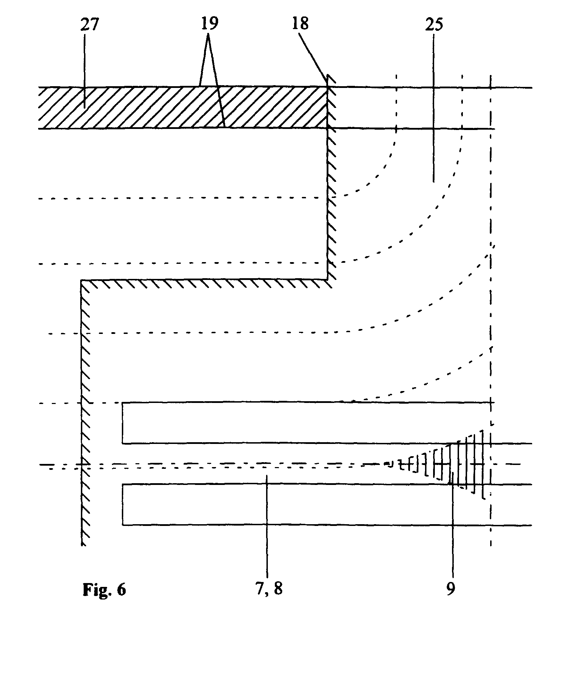

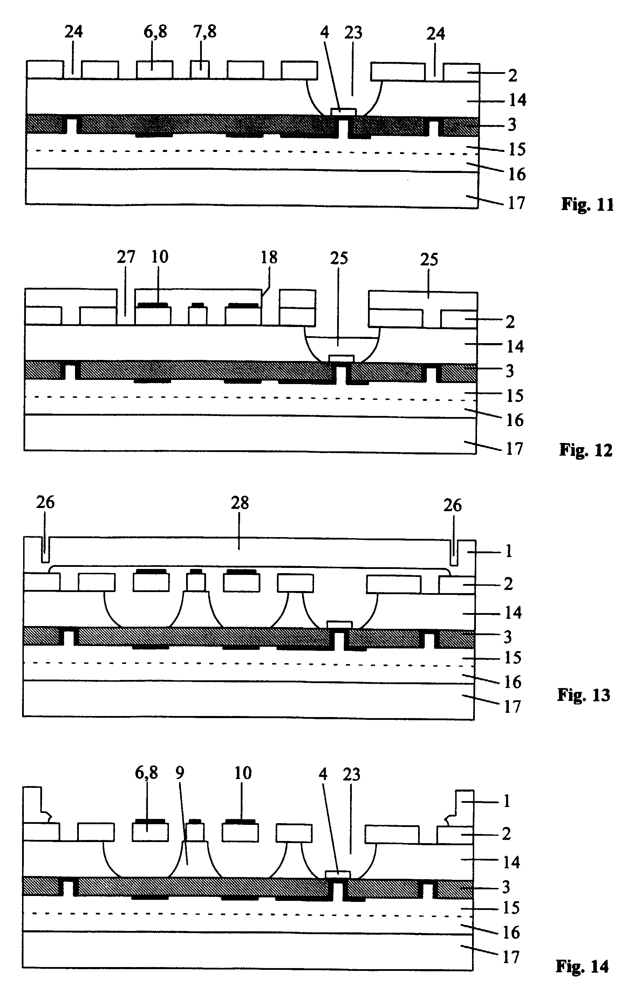

Der so präparierte Halbleiterwafer 2 wird gewendet und durch einen Silicon Fusions Bondprozess auf dem Halbleiterwafer 17 entsprechend der Figur 9 befestigt. Dieser Halbleiterwafer 17 wird zuvor durch thermische Oxidation mit einer Oxidschicht 16 aus Siliziumdioxid von 1 µm Dicke versehen. Im Verbund gewährleistet dieser nach einem Abdünnen des Halbleiterwafers 2 die mechanische Stabilität des Systems. Durch die Umkehrung des Halbleiterwafers 2 werden die Unebenheiten, die durch die Struktur der Isolierschicht 3 und der elektrisch leitenden Schicht 21 entstanden sind, für diese Anordnung gegenstandslos.
Mit einem Chemical-Mechanical-Polishing (CMP) oder einem anderen geeignetem Verfahren (z.B. elektrochemischem Ätzstopp) wird die Siliziumschicht des Halbleiterwafers 2 bis auf eine Dicke von 3,2 um abgedünnt. Nachfolgend wird durch eine thermische Oxidation eine Oxidschicht von 400 nm Dicke erzeugt.
Diese Schicht dient als Hilfsmaske 29 für die Strukturierung der Einzelspiegel 6 in der Siliziumschicht des Halbleiterwafers 2. Mit einem fotolithografischen Prozeß in Verbindung mit einem Oxid- und einem Siliziumätzschritt werden zunächst die Fenster 24 am Rand des Halbleiterwafers 2 erzeugt. Durch diese Fenster 24 können die bereits präparierten Justiermarken 22 erkannt werden. Mit Hilfe dieser Maßnahme kann eine Maske zur Strukturierung der Einzelspiegel 6 ohne mehrfache Anwendung der Zweiseitenlithografie zu den Elektroden 11 justiert werden. An die Strukturierung der Oxidschicht schließt sich ein Plasmaätzschritt an, mit dem die eigentliche Ausbildung der Einzelspiegel 6 in der Siliziumschicht des Halbleiterwafers 2 entprechend der Darstellung der Figur 10 erfolgt. Mit einem nachfolgenden fotolithografischen Prozeß wird der Halbleiterwafer 2 bis auf den Bereich der Bondpads 4 mit Fotolack geschützt.
Nachfolgend entfernt ein Naßätzschritt die Oxidschicht 14 im Bereich 23 der Bondpads 4. Nach einer Lackentfernung beseitigt ein weiterer Naßätzschritt die 400 nm starke Maske.
Anschließend wird eine 1 µm dicke Aluminiumschicht gesputtert.
Mit einem weiteren fotolithografischen Prozeß und einem Ätzschritt werden aus dieser Schicht die Bondpads 4 entsprechend der Figur 11 gefertigt.
Nach der Ausbildung der Bondpads 4 wird eine weitere Aluminiumschicht von 100 nm Dicke gesputtert. Diese übernimmt die Funktion der Reflexionsschicht 10. Die Strukturierung der Reflexionsschicht 10 erfolgt durch einen Plasmaätzschritt, bei dem eine geringe Unterätzung einer aufgebrachten Lackmaske angestrebt wird. Der dadurch entstehende Versatz zwischen der Aluminiumschicht und den Kanten der Einzelspiegel 6 bewirkt zusammen mit einer nachfolgend aufgebrachten Maske 25 einen vollständigen Schutz der Reflexionsschicht 10 im nachfolgenden Ätzprozeß, wie in der Figur 11 dargestellt.
Mit dieser Maske 25 werden entsprechend der Figur 6 während des Ätzens der Oxidschicht 14 die Stützelemente 9 ausgebildet. Diese stützen die Feder 7 im Innern der Einzelspiegel 6 gegenüber der Isolierschicht 3 ab und ermöglichen die erforderliche Auslenkung des Einzelspiegels 6.
Die Anordnung Stützelement 9 und Feder 7 ist in der Figur 3 dargestellt.
Aus Gründen der Übersichtlichkeit zeigt die Figur 6 nur ein Viertel des interessierenden Bereiches in der Umgebung eines Stützelements 9. Dabei kommt den Spiegelkanten 19 und der Kante 18 der Maske 25 besondere Bedeutung zu. Sie begrenzen das Gebiet 27 (Spalt zwischen benachbarten Einzelspiegeln 6), durch welches der Ätzangriff des naßchemischen Ätzers erfolgt. Das Voranschreiten der Ätzfront ist in der Figur 6 durch Strichellinien dargestellt. An den Kanten 18 und 19 schreitet die Ätzfront geradlinig voran, während sie sich in den Ecken kreisförmig fortsetzt. Die Ätzzeit wird so gewählt, daß einerseits die Einzelspiegel 6 vollständig unterätzt werden und andererseits die Stützelemente 9 aus der verbleibenden Oxidschicht 14 entstehen (siehe auch Figur 3). Nach dem Entfernen der Maske 25 wird ein Glaswafer 1 durch anodisches Bonden auf dem System aufgebracht (Figur 13).
Der Glaswafer 1 wird im Bereich der jeweiligen Chips vorher so abgedünnt, daß keine Berührung mit den Einzelspiegeln 6 bei deren Auslenkung erfolgen kann und der anodische Bondprozeß sich auf den äußeren Rahmen des mikromechanischen Spiegelarrays beschränkt. Weiterhin erhält der Glaswafer 1 mit Hilfe einer Diamantsäge Sollbruchstellen 26 entsprechend der Figur 13. Der Glaswafer 1 erfüllt während des Vereinzelns mit einer Diamantsäge eine Schutzfunktion gegenüber dem Kühlwasser. Mit dem Entfernen der Glasfensterinnenteile 28 ist die Präparation beendet (Figur 14).

Das mikromechanische Spiegelarray besitzt in einer Realisierungsvariante eine Fläche von 4,5 x 4 mm². Es wird aus 84 Einzelspiegeln 6 gebildet. Der Einzelspiegel 6 ist 50 µm breit und 4 mm lang. Zur Erzielung eines hohen Bedeckungsgrades der aktiven Schicht beträgt der Abstand der Einzelspiegel 6 zueinander 3 µm.

## Patentansprüche

1. Mikromechanische Bewegungseinrichtung zur Ablenkung von Lichtstrahlen mit folgenden Merkmalen:
einem ersten Halbleiterwafer (2),
einer Oxidschicht (14) auf dem ersten Halbleiterwafer (2), wobei
der erste Halbleiterwafer (2) so geformt ist, daß er Arrays (5) von mikromechanischen, parallel zueinander angeordneten, beweglichen und einstückig bandförmig ausgebildeten Elementen (6) bildet,
ein Array (5) mindestens aus einem Träger und mehreren Elementen (6) besteht,
auf diesen Elementen (6) erste bandförmige Elektroden, die gleichzeitig eine Reflexionsschicht (10) darstellen, angebracht sind,
diese ersten bandförmigen Elektroden auf der der Oxidschicht (14) gegenüberliegenden Seite des ersten Halbleiterwafers (2) angebracht sind, und wobei
in die Elemente (6) mindestens eine Schwenk-Lagerstelle integriert ist,
einer ersten elektrischen Isolierschicht (3) auf der dem Halbleiterwafer (2) gegenüberliegenden Seite der Oxidschicht (14), wobei
auf der ersten elektrischen Isolierschicht (3) korrespondierend zu den Kanten der Elemente (6) mindestens eine zweite Elektrode (11) und der elektrischen Verbindung zwischen den zweiten Elektroden (11) und Bondpads (4) dienende Zuleitungen (12) angeordnet sind,
die erste elektrische Isolierschicht (3) Fenster (13, 20) zum einen für Bondpads (4) und zum anderen für am Rand des ersten Halbleiterwafers (2) angeordnete Justiermarken (22) aufweist, und wobei
die Fenster (20) für die Justiermarken (22) eine Schicht der zweiten Elektroden (11) und Zuleitungen (12) besitzen,
mehreren durch gezieltes Unterätzen der Elemente (6) aus der Oxidschicht (14) entstandene Stützelemente (9) an den Schwenk-Lagerstellen zwischen den Elementen (6) und der ersten Isolierschicht (3),
einer zweiten Isolierschicht (15) auf der ersten Isolierschicht (3) und
einem zweiten Halbleiterwafer (17) mit einer Oxidschicht (16), wobei
die Oxidschicht (16) des zweiten Halbleiterwafers (17) mit der zweiten Isolierschicht (15) verbunden ist.

2. Mikromechanische Bewegungseinrichtung nach Patentanspruch 1, dadurch gekennzeichnet, daß die Schwenk-Lagerstellen Federn (7) sind, die Teile der Elemente (6) sind.

3. Mikromechanische Bewegungseinrichtung nach Patentanspruch 2, dadurch gekennzeichnet, daß die Federn (7) in Richtung der Drehachse der Elemente (6) mit den Stützelementen (9) verbundene, mindestens einseitige und bezüglich der Stützelemente (9) wechselseitig angeordnete Biegebalken sind.

4. Mikromechanische Bewegungseinrichtung nach Patentanspruch 2, dadurch gekennzeichnet, daß die Federn (7) einfache oder doppelte quer zur Drehachse der Elemente (6) angeordnete Biegebalken sind.

5. Mikromechanische Bewegungseinrichtung nach Patentanspruch 2, dadurch gekennzeichnet, daß die Federn (7) membran-, spiral- oder kreuzförmig angeordnete Biegebalken sind.

6. Mikromechanische Bewegungseinrichtung nach Patentanspruch 1, dadurch gekennzeichnet, daß die Bondpads (4) aus einer bondbaren Schicht bestehen.

7. Mikromechanische Bewegungseinrichtung nach Patentanspruch 1, dadurch gekennzeichnet, daß sich eine aus Aluminium oder einer Aluminiumlegierung bestehende Schicht auf den Elementen (6) befindet und daß die Bondpads (4) aus Aluminium oder einer Aluminiumlegierung bestehen.

8. Mikromechanische Bewegungseinrichtung nach Patentanspruch 1, dadurch gekennzeichnet, daß sich Metallschichten aus Gold, Silber, Aluminium, einer Aluminiumlegierung und/oder einem dielektrischen Schichtstapel aus Titanoxid/Chromoxid auf den Elementen (6) befinden und daß die Bondpads (4) aus Aluminium oder einer Aluminiumlegierung bestehen.

9. Mikromechanische Bewegungseinrichtung nach Patentanspruch 1, dadurch gekennzeichnet, daß die erste elektrische Isolierschicht (3) ein in Flußsäure beständiger Isolator ist.

10. Mikromechanische Bewegungseinrichtung nach Patentanspruch 1, dadurch gekennzeichnet, daß die erste elektrische Isolierschicht (3) aus Siliziumnitrid besteht.

11. Mikromechanische Bewegungseinrichtung nach Patentanspruch 1, dadurch gekennzeichnet, daß die zweiten Elektroden (11) und Zuleitungen (12) aus einer der Verbindungen Molybdän-Silizium, Wolfram-Silizium, Tantal-Silizium oder Titan-Silizium bestehen.

12. Mikromechanische Bewegungseinrichtung nach Patentanspruch 1, dadurch gekennzeichnet, daß die Elemente (6) von einer Deckplatte aus lichtdurchlässigem und entspiegeltem Material überdeckt sind.

13. Mikromechanische Bewegungseinrichtung nach Patentanspruch 12, dadurch gekennzeichnet, daß die Deckplatte ein Glaswafer (1) ist, der in dem den Elementen (6) gegenüberliegenden Bereich abgedünnt ist und daß dieser Sollbruchstellen (26) aufweist.

14. Verfahren zur Herstellung von mikromechanischen Bewegungseinrichtungen zur Ablenkung von Lichtstrahlen mit folgenden Schritten:
Oxidation einer Oberfläche eines ersten Halbleiterwafers (2), so daß eine erste Oxidschicht (14) entsteht,
Aufbringen einer ersten elektrischen Isolierschicht (3), die sich in ihrer Ätzbeständigkeit von der der ersten Oxidschicht (14) unterscheidet, auf die erste Oxidschicht (14) des ersten Halbleiterwafers (2),
Ätzen von Fenstern (13, 20) für Bondpads (4) und für am Rand des Halbleiterwafers anzuordnenden Justiermarken (22) in die erste elektrische Isolierschicht (3),
Aufbringen einer elektrisch leitenden Schicht (21) auf die erste elektrische Isolierschicht (3) und in die Öffnungen der Fenster (13, 20),
Ätzen dieser elektrisch leitenden Schicht (21), wobei zweite Elektroden (11) und Verbindungen zwischen jeweils einer dieser zweiten Elektroden (11) und einer Öffnung der Fenster (13) entstehen,
Aufbringen einer zweiten Isolierschicht (15),
Befestigung eines zweiten mit einer Oxidschicht (16) überzogenen und nur als Träger dienenden Halbleiterwafers (17) auf dem ersten Halbleiterwafer (2), wobei die Oxidschicht (16) des zweiten Halbleiterwafers (17) und die zweite Isolierschicht (15) eine dauerhafte Verbindung haben,
Ätzen des ersten Halbleiterwafers (2), so daß Öffnungen (23, 24) zu den Justiermarken (22) und Bondpads (4) entstehen, und so daß Konturen von Elementen (6) mit mindestens einer Schwenk-Lagerstelle entstehen,
Ätzen einer Öffnung (23) in die erste Oxidschicht (14),
Aufbringen einer als Reflexionsschicht (10) dienenden Metallschicht auf die Elemente (6) und Herstellung der Bondpads (4), und
Ätzen der ersten Oxidschicht (14) mit unterschiedlichen Ätzfronten, wobei die Elemente (6) vollständig unterätzt werden und durch ein kreisförmiges Voranschreiten an den Kanten der Ätzfronten Bereiche der ersten Oxidschicht (14) zwischen Isolierschicht (3) und Schwenk-Lagerstellen als Stützelemente (9) verbleiben,
wobei die zweite Elektroden (11) parallel zu den Kanten der Elemente (6) angeordnet sind.

15. Verfahren nach Patentanspruch 14, gekennzeichnet dadurch, daß die als Opferschicht dienende Oxidschicht (14) aus zwei mit einer Oxidschicht versehenen Halbleiterwafern mit Hilfe eines Silicon-Fusion-Bondprozesses und anschließendem Entfernen eines dieser Halbleiterwafer hergestellt wird.

16. Verfahren nach Patentanspruch 14, gekennzeichnet dadurch, daß ein Glaswafer (1) auf dem Halbleiterwafer (2) aufgebracht wird.

17. Verfahren nach Patentanspruch 14, gekennzeichnet dadurch, daß der Glaswafer (1) durch anodisches Bonden mit dem Halbleiterwafer (2) verbunden wird.

18. Verfahren nach Patentanspruch 14, gekennzeichnet dadurch, daß die mikromechanischen Spiegelarrays durch Sägen mit Hilfe einer Diamantsäge vereinzelt werden.

## Claims

1. The micromechanical movement device for deflecting laser beams with the following characteristics:
a first semiconductor wafer (2),
an oxide layer (14) on the first semiconductor wafer (2), where
the first semiconductor wafer (2) is formed in such a way that it forms arrays (5) of micromechanical, flexible, one-piece bandlike elements (6), which are arranged parallel to each other,
one array (5) consists of at least one carrier and several elements (6),
first bandlike electrodes are mounted on these elements (6) which simultaneously serve as reflection layer (10),
these first bandlike electrodes are mounted on the oxide layer (14) on the opposite side of the first semiconductor wafer (2), and where
at least one swivel bearing is integrated in the elements (6),
a first electric insulation layer (3) on the side of the oxide layer (14) opposite the semiconductor wafer (2), where
arranged on the first electric insulation layer (3) corresponding to the edges of the elements (6) there is at least one second electrode (11) as well as the feeder lines (12) which serve as an electrical connection between the second electrodes (11) and the bondpads (4),
the first electric insulation layer (3) has windows (13, 20) for the bondpads (4) and for the adjustment marks (22), which are located on the edge of the first semiconductor wafer (2), and where
the windows (20) for the adjustment marks (22) have a layer of the second electrodes (11) and feeder lines (12),
several supporting elements (9) created by purposeful undercutting of the elements (6) from the oxide layer (14) on the swivel bearings between the elements (6) and the first insulation layer (3),
a second insulation layer (15) on the first insulation layer (3) and
a second semiconductor wafer (17) with an oxide layer (16), where
the oxide layer (16) of the second semiconductor wafer (17) is connected to the second insulation layer (15).

2. The micromechanical movement device according to patent claim 1, characterised by swivel bearings designed as springs (7) which are part of the elements (6).

3. The micromechanical movement device according to patent claim 2, characterised by springs (7) in the direction of the spin axis of the elements (6) which are flexural beams connected to the supporting elements (9) placed on at least one side, and in relation to the supporting elements (9) on alternating sides.

4. The micromechanical movement device according to patent claim 2, characterised by springs (7) which are single or double flexural beams arranged cross-wise to the spin axis of the elements (6).

5. The micromechanical movement device according to patent claim 2, characterised by springs (7) which are membrane-shaped, spiral-shaped or cross-shaped arrangements of flexural beams.

6. The micromechanical movement device according to patent claim 1, characterised by bondpads (4) which consist of a bondable layer.

7. The micromechanical movement device according to patent claim 1, characterised by a layer which is composed of aluminium or aluminium alloy which is present on the elements (6) and the bondpads (4) which are composed of aluminium or aluminium alloy.

8. The micromechanical movement device according to patent claim 1, characterised by metal layers of gold, silver, aluminium, aluminium alloy and/or a dielectric layer stack of titanium oxide/chromium oxide being present on the elements (6) and the bondpads being composed of aluminium or aluminium alloy.

9. The micromechanical movement device according to patent claim 1, characterised by the first electric insulation layer (3) acting as an insulator resistant in hydrofluoric acid.

10. The micromechanical motion facilities according to patent claim 1 characterised by the first electric insulation layer (3) consisting of silicon nitride.

11. The micromechanical movement device according to patent claim 1, characterised by the second electrodes (11) and the feeder lines (12) are made up of a molybdenum-silicon, tungstensilicon, tantalum-silicon or titanium-silicon compound.

12. The micromechanical movement device according to patent claim 1, characterised by elements (6) which are covered by a plate of transparent and reflection-reduced material.

13. The micromechanical movement device according to patent claim 12, characterised by the cover plate being a glass wafer (1) which is thinned in the area opposite the elements (6) and possesses rupture joints (26).

14. Method for the manufacturing of micromechanical movement devices for deflecting laser beams using the following steps:
oxidation of the surface of the first semiconductor wafer (2) to create a first oxide layer (14),
application of a first electric insulation layer (3) which is different from the first oxide layer (14) with regard to the etching resistance, onto the first oxide layer (14) of the first semiconductor wafer (2),
etching of windows (13, 20) for bondpads (4) and for adjustment marks (22) are to be arranged on the edge of the semiconductor wafer into the first electric insulation layer (3),
application of an electrically conducting layer (21) onto the first electric insulation layer (3) and into the openings of the windows (13, 20),
etching of this electrically conducting layer (21) where the second electrodes (11) as well as the connection are always between one of these second electrodes (11), and where an opening of the window (13) is created,
application of a second insulation layer (15),
mounting of a second semiconductor wafer (17) covered with an oxide layer (16) and serving exclusively as a carrier onto the first semiconductor wafer (2), which permanently connects the oxide layer (16) of the second semiconductor wafer (17) with the second insulation layer (15),
etching of the first semiconductor wafer (2), to create the openings (23, 24) to the adjustment marks (22) and to the bondpads (4) and to form the contours of the elements (6) with at least one swivel bearing,
etching of an opening (23) into the first oxide layer (14),
application of a metal layer serving as reflection layer (10) onto the elements (6) and manufacturing of the bondpads (4), and
etching of the first oxide layer (14) with different etching lines where the elements (6) are completely undercut and where areas of the first oxide layer (14) remain as supporting elements (9) between the insulation layer (3) and the swivel bearings realized by circular progression on the edges of the etching lines,
where the second electrodes (11) are arranged parallel to the edges of the elements (6).

15. Method according to patent claim 14, characterised by the oxide layer (14) serving as sacrificial layer manufactured from two semiconductor wafers, covered with an oxide layer by means of a silicon fusion bond process and the following removal of one of these semiconductor wafers.

16. Method according to patent claim 14, characterised by one glass wafer (1) being mounted onto the semiconductor wafer (2).

17. Method according to patent claim 14, characterised by the glass wafer (1) being connected with the semiconductor wafer (2) by anodic bonding.

18. Method according to patent claim 14, characterised by decollation of the micromechanical mirror arrays by sawing with a diamond saw.

## Revendications

1. Dispositif de mouvement micromécanique pour la déflexion de rayons laser présentant les caractéristiques suivantes :
une première tranche semi-conductrice (2),
une couche d'oxyde (14) sur la première tranche semi-conductrice (2), sachant
que la première tranche semi-conductrice (2) est formée de manière à constituer des zones (5) d'éléments micromécaniques (6) qui sont constitués en bandes d'un seul tenant, mobiles et disposés les uns parallèlement aux autres,
qu'une zone (5) comporte au moins un support et plusieurs éléments (6),
que quelques premières électrodes en forme de bandes, qui constituent en même temps une couche réfléchissante (10), sont disposées sur ces éléments (6),
que ces premières électrodes en forme de bandes sont disposées sur le côté opposé à la couche d'oxyde (14) de la première tranche semi-conductrice (2), et sachant
qu'au moins un point d'appui pivotant est intégré dans les éléments (6),
une première couche isolante électrique (3) sur le côté de la couche d'oxyde (14) qui est opposé à la tranche semi-conductrice (2), sachant
qu'au moins une deuxième électrode (11) et des conduites d'amenée (12) servant à la connexion électrique entre les deuxièmes électrodes (11) et les remplissages de bonding (4) sont disposées sur la première couche isolante électrique (3) correspondant aux bords des éléments (6),
que la première couche isolante électrique (3) présente des fenêtres (13, 20) d'une part pour les remplissages de bonding (4) et d'autre part pour les marques d'ajustage (22) disposées sur le bord de la première tranche semi-conductrice (2), et sachant
que les fenêtres (20) pour les marques d'ajustage (22) comportent la couche des deuxièmes électrodes (11) et des conduites d'amenée (12),
plusieurs éléments supports (9) obtenus par un décapage précis en sous-face des éléments (6) de la couche d'oxyde (14) sur les points d'appui pivotants entre les éléments (6) et la première couche isolante (3),
une deuxième couche isolante (15) sur la première couche isolante (3) et
une deuxième tranche semi-conductrice (17) avec une couche d'oxyde (16), sachant que
la couche d'oxyde (16) de la deuxième tranche semi-conductrice (17) est jointe à la deuxième couche isolante (15).

2. Dispositif de mouvement micromécanique selon la revendication 1, caractérisé en ce que les points d'appui pivotants sont des ressorts (7) qui sont des pièces des éléments (6).

3. Dispositif de mouvement micromécanique selon la revendication 2, caractérisé en ce que les ressorts (7) sont des barres flexibles disposées à la réciproque des éléments supports (9), au moins unilatérales, jointes aux éléments supports (9) dans le sens de l'axe de rotation des éléments (6).

4. Dispositif de mouvement micromécanique selon la revendication 2, caractérisé en ce que les ressorts (7) sont des barres flexibles simples ou doubles disposées transversalement par rapport à l'axe de rotation des éléments (6).

5. Dispositif de mouvement micromécanique selon la revendication 2, caractérisé en ce que les ressorts (7) sont des barres flexibles disposées en forme de membranes, de spirales ou de croix.

6. Dispositif de mouvement micromécanique selon la revendication 1, caractérisé en ce que les remplissages de bonding (4) se composent d'une couche apte au bonding.

7. Dispositif de mouvement micromécanique selon la revendication 1, caractérisé en ce que une couche composée d'aluminium ou d'un alliage d'aluminium se trouve sur les éléments (6) et que les remplissages de bonding (4) se composent d'aluminium ou d'un alliage d'aluminium.

8. Dispositif de mouvement micromécanique selon la revendication 1, caractérisé en ce que les couches métalliques en or, en argent, en aluminium, en un alliage d'aluminium et/ou en une superposition de couches diélectriques à base d'oxyde de titane/d'oxyde de chrome se trouvent sur les éléments (6) et que les remplissages de bonding (4) se composent d'aluminium ou d'un alliage d'aluminium.

9. Dispositif de mouvement micromécanique selon la revendication 1, caractérisé en ce que la première couche isolante électrique (3) est un isolateur résistant dans l'acide fluorhydrique.

10. Dispositif de mouvement micromécanique selon la revendication 1, caractérisé en ce que la première couche isolante électrique (3) se compose de nitrure de silicium.

11. Dispositif de mouvement micromécanique selon la revendication 1, caractérisé en ce que les deuxièmes électrodes (11) et les conduites d'amenée (12) se composent d'un des composés suivants : silicium de molybdène, silicium de tungstène, silicium de tantale ou de silicium de titane.

12. Dispositif de mouvement micromécanique selon la revendication 1, caractérisé en ce que les éléments (6) sont recouverts d'une plaque de recouvrement fabriquée dans un matériau translucide et antireflet.

13. Dispositif de mouvement micromécanique selon la revendication 12, caractérisé en ce que la plaque de recouvrement est une tranche en verre (1) qui est amincie dans la partie opposée aux éléments (6) et que celle-ci présente des points de rupture théoriques (26).

14. Méthode de manufacture des dispositifs de mouvement micromécaniques pour la déflexion de rayons laser selon les étapes suivantes :
oxydation d'une surface d'une première tranche semi-conductrice (2) de manière à générer une première couche d'oxyde (14),
application d'une première couche isolante électrique (3), qui, de par sa résistance aux agressions caustiques, se distingue de celle de la première couche d'oxyde (14), sur la première couche d'oxyde (14) de la première tranche semi-conductrice (2),
décapage des fenêtres (13, 20) pour les remplissages de bonding (4) et pour les marques d'ajustage (22) devant être disposées sur le bord de la tranche semi-conductrice dans la première couche isolante électrique (3),
application d'une couche électroconductrice (21) sur la première couche isolante électrique (3) et dans les ouvertures des fenêtres (13, 20),
décapage de cette couche électroconductrice (21), ce qui génère les deuxièmes électrodes (11) et les liaisons entre l'une de ces deuxièmes électrodes (11) et une ouverture des fenêtres (13) respectivement,
application d'une deuxième couche isolante (15),
fixation d'une deuxième tranche semi-conductrice (17), recouverte d'une couche d'oxyde (16) et ne servant que de support, sur la première tranche semi-conductrice (2), sachant que la couche d'oxyde (16) de la deuxième tranche semi-conductrice (17) et la deuxième couche isolante (15) présentent une liaison durable,
décapage de la première tranche semi-conductrice (2) de sorte qu'apparaissent des ouvertures (23, 24) vers les marques d'ajustage (22) et les remplissages de bonding (4) apparaissent et de sorte qu'apparaissent des contours des éléments (6) avec au moins un point d'appui pivotant,
Décapage d'une ouverture (23) dans la première couche d'oxyde (14),
application d'une couche métallique servant de couche réfléchissante (10) sur les éléments (6) et fabrication des remplissages de bonding (4), et
décapage de la première couche d'oxyde (14) avec différentes faces de Décapage, sachant que les éléments (6) sont entièrement mordancés en sous-face et qu'il reste, sous forme d'éléments d'appui (9), des zones de la première couche d'oxyde (14) entre la couche isolante (3) et les points d'appui pivotants par le fait d'une avancée circulaire sur les bords des faces de décapage,
sachant que les deuxièmes électrodes (11) sont placées parallèlement aux bords des éléments (6).

15. Méthode selon la revendication 14, caractérisé en ce que la couche d'oxyde (14) servant de couche réactive est fabriquée à partir de deux tranches semi-conductrices munies d'une couche d'oxyde à l'aide d'un processus de bonding-fusion au silicone et en retirant ensuite une de ces tranches semi-conductrices.

16. Méthode selon la revendication 14, caractérisé en ce qu'une tranche en verre (1) est appliquée sur la tranche semi-conductrice (2).

17. Méthode selon la revendication 14, caractérisé en ce que la tranche en verre (1) est liée à la tranche semi-conductrice (2) par bonding anodique.

18. Méthode selon la revendication 14, caractérisé en ce que les zones réfléchissantes micromécaniques sont séparées par sciage à l'aide d'une scie à diamant.
